# EUROPEAN PATENT SPECIFICATION

(11) **EP 4 329 260 B1**
(45) Date of publication and mention of the grant of the patent: **28.10.2026**
(21) Application number: 21939095.2
(22) Date of filing: 20.12.2021
(51) Int. Cl.: H04L 47/10

(54) **TRANSMISSION CONTROL METHOD, APPARATUS AND SYSTEM**
ÜBERTRAGUNGSSTEUERUNGSVERFAHREN, -VORRICHTUNG UND -SYSTEM
PROCÉDÉ, APPAREIL ET SYSTÈME DE COMMANDE DE TRANSMISSION

(30) Priority: 26.04.2021 CN 202110456076
(43) Date of publication of application: 28.02.2024
(73) Proprietor: Huawei Technologies Co., Ltd., Longgang Shenzhen, Guangdong 518129 (CN)
(72) Inventor: WU, Tao, Shenzhen, Guangdong 518129 (CN); YAN, Jian, Shenzhen, Guangdong 518129 (CN); WANG, Bingquan, Shenzhen, Guangdong 518129 (CN); HAN, Lei, Shenzhen, Guangdong 518129 (CN); GONG, Xiangyu, Shenzhen, Guangdong 518129 (CN); WEN, Huafeng, Shenzhen, Guangdong 518129 (CN)
(74) Representative: Pfenning, Meinig & Partner mbB
(86) International application number: PCT/CN2021/139819
(87) International publication number: WO 2022/227636

(56) References cited:
- CN-A- 101 340 358
- CN-B- 106 134 138
- US-B1- 7 911 960
- US-B1- 7 930 341
- ANONYMOUS: "Ethernet flow control - Wikipedia", 28 January 2021 (2021-01-28), XP093161927, Retrieved from the Internet <URL:https://en.wikipedia.org/w/index.php?title=Ethernet_flow_control&oldid=1003357352> [retrieved on 20240514]

## Description

### TECHNICAL FIELD

This application relates to the field of communication, and in particular, to a transmission control method, an apparatus, and a system.

### BACKGROUND

The Institute of Electrical and Electronics Engineers (institute of electrical and electronics engineers, IEEE) 802.1 working group defines a priority flow control (priority flow control, PFC) protocol, to avoid packet loss in the Ethernet.

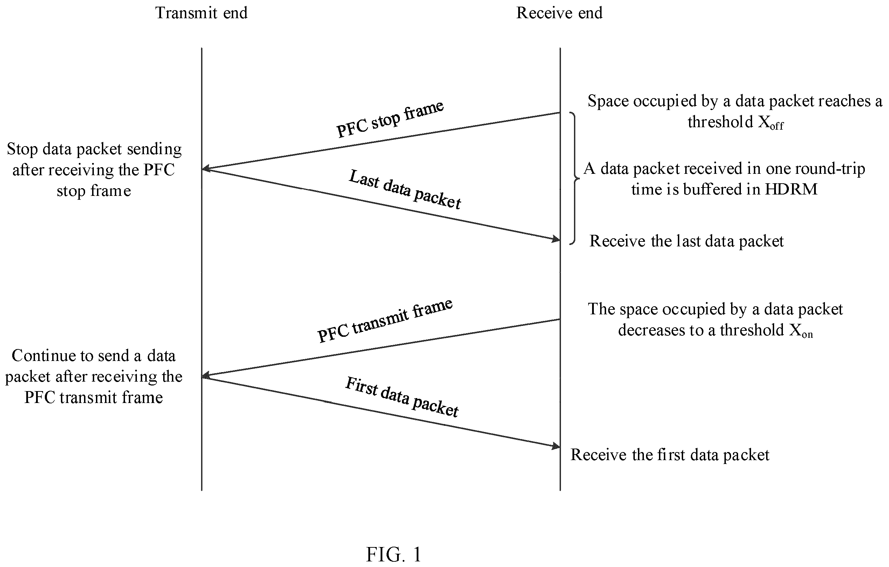

In an existing PFC protocol, as shown in FIG. 1, for a data packet of a specific priority, when a data packet processing capability of a receive end is inadequate, data packets are overstocked at the receive end. If space occupied by a data packet at the receive end reaches a threshold *X*_{off} , the receive end sends a PFC stop frame to a transmit end. After receiving the PFC stop frame, the transmit end stops data packet sending, and a last data packet sent by the transmit end before stopping data packet sending may arrive at the receive end. After a period of time, when space occupied by a data packet at the receive end decreases to a threshold *X*ₒₙ, the receive end sends a PFC transmit frame to the transmit end. After receiving the PFC transmit frame, the transmit end continues data packet sending. For example, as shown in FIG. 1, a first data packet sent by the transmit end may arrive at the receive end.

Currently, in one round-trip time from a moment when the receive end sends the PFC stop frame to a moment when the receive end receives the last data packet, a data packet received by the receive end is buffered in headroom (headroom, HDRM). A size of the HDRM is one bandwidth delay product (bandwidth delay product, BDP). In addition, *X*_{off} and *X*ₒₙ also need a buffer whose size is at least one BDP, to ensure that the receive end continuously outputs data packets. Therefore, an existing PFC mechanism needs buffer space whose size is at least two BDPs.

To reduce a requirement on the size of the buffer space of the receive end, in the conventional technology, values of *X*_{off} and *X*ₒₙ are usually decreased, so that the values of *X*_{off} and *X*ₒₙ are both less than one BDP. However, when *X*_{off} is less than one BDP, the receive end may have no data packet to output between a moment at which the receive end sends the PFC transmit frame to the transmit end and a moment at which the receive end receives the first data packet sent by the transmit end.
US7930341B1 discloses a method, apparatus, and computer-readable media comprising storing in a first buffer data received from a network device; sending the data from the first buffer to a second buffer in response to status signals asserted by the second buffer, wherein the second buffer stores the data, and wherein the status signals asserted by the second buffer indicate an amount of the data in the second buffer; and sending flow-control signals to the network device based on the status signals asserted by the second buffer, thereby causing the network device to regulate the amount of the data sent from the network device in response to the flow-control signals.

### SUMMARY

Embodiments of this application provide a transmission control method and an apparatus, to ensure that a receive end continuously outputs data packets. The invention is defined by the independent claims. Further embodiments of the invention are defined by the dependent claims.

In the transmission control method provided in this application, the first communication apparatus periodically samples the occupancy of the first buffer, and determines the first duration based on the sampling cycle and the sampled occupancy of the first buffer. A value of the sampling cycle is small, so that based on this solution, the second communication apparatus can be controlled, at a finer granularity, to stop sending or send the data packet of the first priority.

### BRIEF DESCRIPTION OF DRAWINGS

FIG. 1 is a schematic diagram of a PFC-protocol-based control process according to the conventional technology;
FIG. 2 is a schematic diagram of a working principle of PFC according to the conventional technology;
FIG. 3 is a schematic diagram of a structure of a PFC frame according to the conventional technology;
FIG. 4 is a curve chart of a size of space occupied by a data packet at a receive end when a size of buffer space of the receive end is two BDPs according to the conventional technology;
FIG. 5 is a curve chart of a size of space occupied by a data packet at a receive end when a size of buffer space of the receive end is less than two BDPs according to the conventional technology;
FIG. 6 is a schematic diagram of an architecture of a communication system according to an embodiment of this application;
FIG. 7 is a schematic diagram of a network architecture of an active-active DC according to the conventional technology;
FIG. 8 is a schematic diagram of a structure of a communication apparatus according to an embodiment of this application;
FIG. 9 is a flowchart 1 of a transmission control method according to an embodiment of this application;
FIG. 10 is a flowchart 2 of a transmission control method according to an embodiment of this application;
FIG. 11 is a flowchart 3 of a transmission control method according to an embodiment of this application;
FIG. 12 is a flowchart 4 of a transmission control method according to an embodiment of this application; and
FIG. 13 is a schematic diagram of a structure of a communication apparatus according to an embodiment of this application.

### DESCRIPTION OF EMBODIMENTS

For ease of understanding the technical solutions in embodiments of this application, the following first briefly describes technologies or terms related to this application.

It should be noted that in the following embodiments, an example in which a parameter *s* indicates a data receiving rate of a first communication apparatus is used for description. Unified descriptions are provided herein, and details are not described below again.

### First: PFC protocol

When data is transmitted between data centers, the PFC protocol may be used to reduce packet loss in the Ethernet.

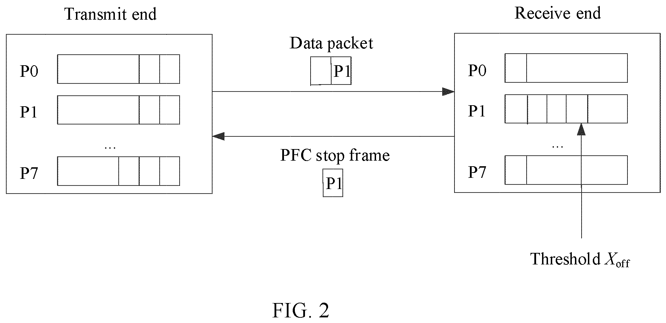

FIG. 2 shows a working principle of PFC. At a transmit end or a receive end, a data packet of a priority P0, P1, ..., P6, or P7 is stored in buffer space allocated to the priority. A data packet of the priority P1 is used as an example. The receive end continuously receives data packets of the priority P1 from the transmit end, and stores the data packets in buffer space allocated to the priority P1. When a data packet processing capability of the receive end is inadequate, a rate at which the receive end receives the data packets of the priority P1 is greater than a rate at which the receive end outputs the data packets of the priority P1, and consequently, the data packets of the priority P1 are overstocked. When space occupied by a data packet of the priority P1 accumulates to a threshold *X*_{off}, the receive end sends a PFC stop frame to the transmit end, to request the transmit end to stop sending a data packet of the priority P1.

### Second: PFC frame

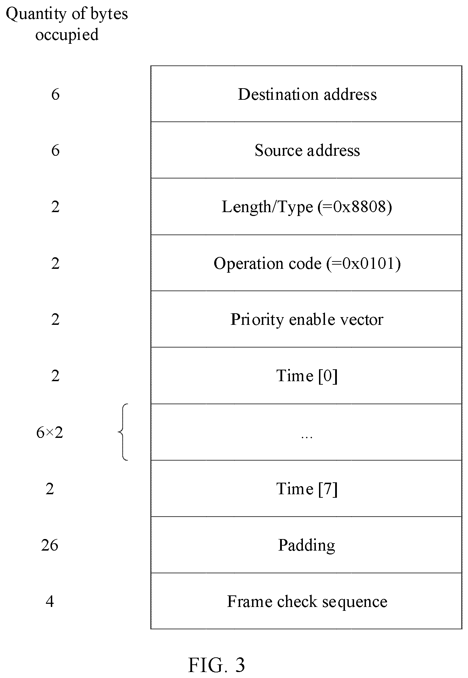

FIG. 3 shows a schematic diagram of a structure of the PFC frame, including a "destination address", a "source address", a "length/type (=0x8808)", an "operation code (=0x0101)", a "priority enable vector", time fields ("time [0]", "time [1]", ..., "time [7]"), a "padding", and a "frame check sequence". The "destination address" and the "source address" each occupy six bytes. The "length/type", the "operation code", and the "priority enable vector" each occupy two bytes. Each of the time fields occupies two bytes. The "padding" occupies 26 bytes. The "frame check sequence" occupies four bytes.

In the PFC frame, the time field is used to carry time for which the transmit end stops sending a data packet of a corresponding priority. A count in each time field ranges from 0 to 65535. One count value indicates time required for transmission of 512 bits. The field "time [0]" is used as an example. If a rate of receiving and sending data between the transmit end and the receive end is 100 Gbps, and a count value in the field "time [0]" in the PFC stop frame sent by the receive end to the transmit end is 65535, time for which the transmit end needs to stop sending a data packet of the priority P0 is 65535*512 b/100 Gbps=335.5392 µs.

Particularly, when a count value in a specific time field is 0, it indicates that time for which the transmit end stops sending a data packet of a corresponding priority is 0, in other words, the transmit end is allowed to send the data packet of the corresponding priority. In this case, the PFC frame is a PFC transmit frame.

In the PFC frame, the "priority enable vector" is used to determine whether to enable each time field. The "priority enable vector" may be represented as *e*[7]*......e*[1]*e*[0]*.* For example, when *e*[*i*] =1, it may indicate that a field "time [*i*]" is enabled; or when *e*[i] *=* 0, it may indicate that a field "time [*i*]" is disabled. *i* = 0,1,......7.

For definitions and function descriptions of the other fields in the PFC frame, refer to related standard documents. Details are not described herein again.

### Third: HDRM

With reference to FIG. 2, after the receive end sends the PFC stop frame to the transmit end, the transmit end does not immediately stop data packet sending, so that the receive end still continues to receive data packets of the priority P1 from the transmit end until a last data packet sent by the transmit end before stopping data packet sending arrives at the receive end. Therefore, the HDRM is defined in the PFC protocol. The HDRM is used to store data packets received by the receive end between a moment at which the receive end sends the PFC stop frame and a moment at which the receive end receives the last data packet.

A size of the HDRM is one BDP. One BDP satisfies the following formula (1): $BDP = s * 2 T$ Formula (1)

*s* indicates the rate of receiving and sending data between the transmit end and the receive end. *T* indicates a unidirectional transmission delay of data transmission between the transmit end and the receive end, including an internal delay and an external line transmission delay. Especially in a long-distance transmission scenario, the external line transmission delay accounts for a large proportion, and the internal delay accounts for a small proportion. For definitions and calculation methods of the internal delay and the external line transmission delay, refer to the IEEE802.1Qbb standard document. Details are not described herein again.

### Fourth: Size of buffer space of the receive end in the conventional technology

In an existing PFC protocol, in addition to that the HDRM occupies buffer space of one BDP, *X*_{off} and *X*ₒₙ also need a buffer whose size is at least one BDP, to ensure that the receive end continuously outputs data packets. That is, in an existing PFC mechanism, the receive end needs buffer space whose size is at least two BDPs. Correspondingly, time *T_{D}* for data transmission at the receive end satisfies the following formula (2): ${T}_{D} = 2 BDP / s = 2 * s * 2 T / s = 4 T$ Formula (2)

For meanings of parameters in Formula (2), refer to corresponding parameters in Formula (1). Details are not described herein again.

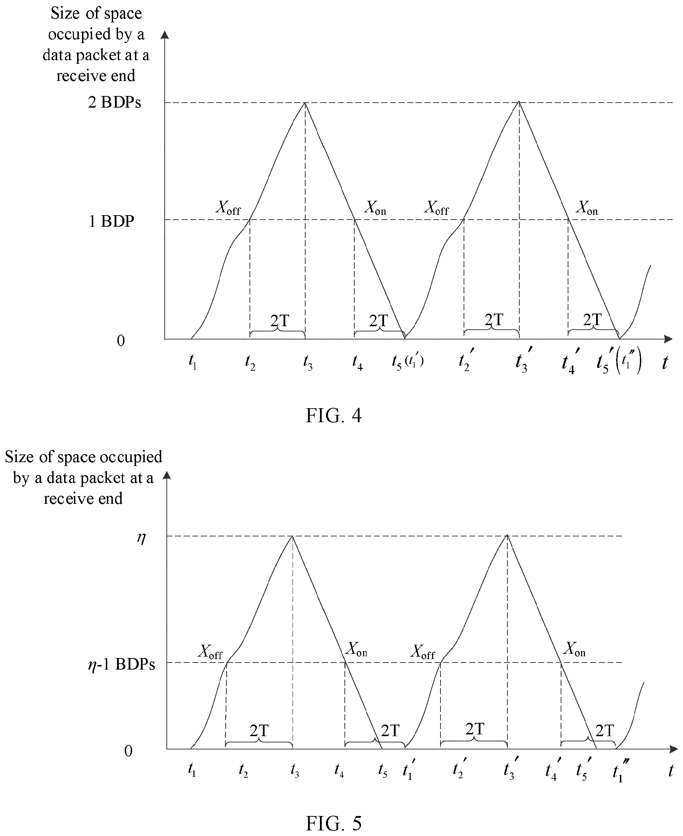

FIG. 4 shows a curve of a size of space occupied by a data packet at the receive end when the size of the buffer space of the receive end is two BDPs. The following describes a control cycle from *t*₁ to *t*₅ in FIG. 4 with reference to a schematic diagram of a PFC-protocol-based control process shown in FIG. 1.

In FIG. 4, the moment *t*₁ is a moment at which the size of the space occupied by a data packet at the receive end is 0. A moment *t*₂ is a moment at which the space occupied by a data packet at the receive end reaches the threshold *X*_{off} . A value of *X*_{off} is one BDP. In this case, the receive end sends the PFC stop frame to the transmit end. In a time period from *t*₁ to *t*₂, the data packet processing capability of the receive end is inadequate, and consequently, data packets at the receive end are overstocked. Therefore, the space occupied by a data packet at the receive end gradually increases.

The moment *t*₂ to a moment *t*₃ are used to transmit the PFC stop frame and the last data packet sent by the transmit end before stopping data packet sending, and the duration is one round-trip time, that is, 2T. In a time period from *t*₂ to *t*₃, a data packet received by the receive end is buffered in the HDRM, and the HDRM occupies buffer space of one BDP. Therefore, the space occupied by a data packet at the receive end increases by one BDP. The moment *t*₃ is a moment at which the space occupied by a data packet at the receive end reaches a maximum value. The maximum value is the size of the buffer space of the receive end, that is, two BDPs. In this case, the receive end receives the last data packet sent by the transmit end before stopping data packet sending.

In a time period from *t*₃ to *t*₄, the receive end no longer receives but only outputs a data packet, so that the space occupied by a data packet at the receive end gradually decreases. Therefore, overstocking of data packets at the receive end starts to be alleviated. It is assumed herein that a rate at which the receive end outputs a data packet and a rate at which the receive end receives a data packet are the same, that is, both *s* . In other words, in the time period from *t*₃ to *t*₄*,* a rate at which the space occupied by a data packet at the receive end decreases is *s* . The moment *t*₄ is a moment at which the space occupied by a data packet at the receive end decreases to a threshold *X*ₒₙ . In this case, the receive end starts to send the PFC transmit frame to the transmit end. A value of *X*ₒₙ is less than or equal to that of *X*_{off} . It is assumed herein that the value of *X*ₒₙ is equal to that of *X*_{off} , and is one BDP.

The moment *t*₄ to the moment *t*₅ are used to transmit the PFC transmit frame and a first data packet sent by the transmit end after resuming sending, and duration is one round-trip time, that is, 2T. In a time period from *t*₄ to *t*₅, the receive end is still in a state in which no data packet is input but output, so that the space occupied by a data packet at the receive end still decreases at the rate *s* . If the space occupied by a data packet at the receive end decreases at the rate *s* for 2T, a decrease is s *** 2*T.* That is, the decrease is one BDP. It is clear that the moment *t*₅ is a moment at which the size of the space occupied by a data packet at the receive end is 0 again, and the moment *t*₅ is also a moment *t*₁' in a next control cycle. In this case, the receive end receives the first data packet sent by the transmit end.

In the conventional technology, the values of *X*_{off} and *X*ₒₙ are usually reduced, to reduce a requirement on the size of the buffer space of the receive end. However, when *X*_{off} is less than one BDP, that is, when the size of the buffer space of the receive end is less than two BDPs, a problem that the receive end has no data packet to output is introduced.

FIG. 5 shows a curve of a size of space occupied by a data packet at the receive end when the size of the buffer space of the receive end is less than two BDPs. If the size of the buffer space of the receive end is *η,* and *η* is less than two BDPs, a buffer size required by *X*_{off} and *X*ₒₙ is obtained by subtracting one BDP from *η,* and a difference is less than one BDP.

With reference to FIG. 4, in FIG. 5, the moment *t*₅ is a moment at which the size of the space occupied by a data packet at the receive end is 0 again. In the time period from *t*₄ to *t*₅, the space occupied by a data packet at the receive end still decreases at the rate *s* . However, a decrease from *X*ₒₙ to 0 is less than one BDP, so that decrease duration is less than 2T. Therefore, between the moment *t*₅ and the start moment *t*₁' of the next control period, there is a period of time in which the space occupied by a data packet at the receive end remains 0. That is, the receive end has no data packet to output in a time period from *t*₅ to *t*₁*'.* The moment *t*₁' is a moment at which the receive end receives the first data packet sent by the transmit end.

The following describes the technical solutions in embodiments of this application with reference to the accompanying drawings in embodiments of this application. In the descriptions of this application, unless otherwise specified, "/" indicates that associated objects are in an "or" relationship. For example, A/B may indicate A or B. In this application, "and/or" is merely an association relationship describing associated objects, and indicates that three relationships may exist. For example, A and/or B may indicate the following three cases: Only A exists, both A and B exist, and only B exists. A and B each may be singular or plural. In addition, in descriptions of this application, unless otherwise specified, "a plurality of" means two or more than two. "At least one of the following items (pieces)" or a similar expression thereof means any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically a same function and effect. A person skilled in the art may understand that the words such as "first" and "second" do not limit a quantity and an execution order, and the words "first" and "second" are not necessarily different. In addition, in embodiments of this application, terms such as "example" or "for example" are used to represent giving an example, an illustration, or a description. Any embodiment or design solution described as "an example" or "for example" in embodiments of this application should not be construed to be more preferential or advantageous than other embodiments or design solutions. To be precise, the terms such as "example" or "for example" are intended to present a related concept in a specific manner for ease of understanding.

In addition, an application scenario described in embodiments of this application is intended to more clearly describe the technical solutions in embodiments of this application, and does not constitute a limitation on the technical solutions provided in embodiments of this application. A person of ordinary skill in the art may know that with emergence of a new scenario, the technical solutions provided in embodiments of this application are also applicable to a similar technical problem.

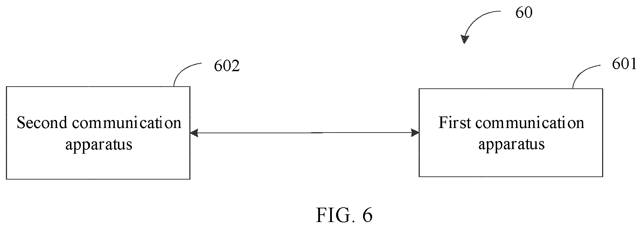

FIG. 6 shows a communication system 60 according to an embodiment of this application. The communication system 60 includes a first communication apparatus 601 and a second communication apparatus 602 that communicate with each other.

The first communication apparatus 601 is configured to obtain a sampling cycle. The sampling cycle is a time interval at which the first communication apparatus 601 samples occupancy of a first buffer. The first buffer is used to store a data packet of a first priority. The first communication apparatus 601 is further configured to determine occupancy of the first buffer at a first sampling moment based on the sampling cycle. The first communication apparatus 601 is further configured to determine first duration based on the sampling cycle and the occupancy of the first buffer at the first sampling moment. The first duration is duration for which the second communication apparatus 602 stops sending data to the first communication apparatus 601. The first communication apparatus 601 is further configured to send first indication information to the second communication apparatus 602 based on the first duration. The first indication information is used to control the duration for which the second communication apparatus 602 stops sending data to the first communication apparatus 601. The second communication apparatus 602 is configured to receive the first indication information from the first communication apparatus 601. Specific implementation and technical effects of this solution are described in detail in subsequent method embodiments, and details are not described herein again.

The following uses an active-active data center (data center, DC) as an example to describe the application scenario according to embodiments of this application. "Active-active" indicates that both an active device and a standby device exist.

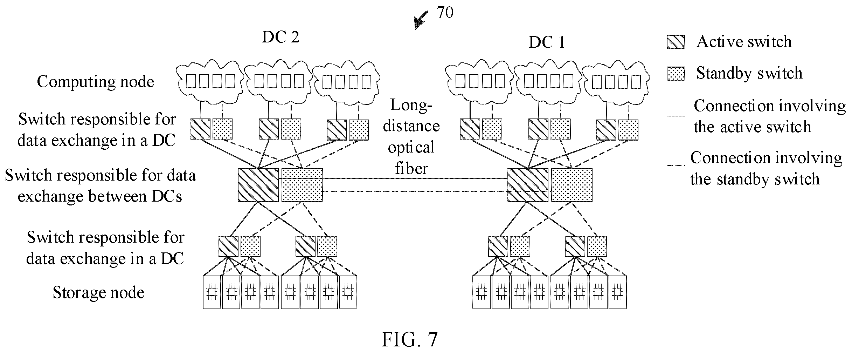

FIG. 7 shows a communication system including a DC 1 and a DC 2. Each DC includes a computing node for data computing, a switch responsible for data exchange in the DC, a switch responsible for data exchange between DCs, and a storage node for data storage. As shown in FIG. 7, the switches are classified into active switches and standby switches. Communication is performed between active switches of different DCs and between standby switches of different DCs through a long-distance optical fiber, to implement long-distance lossless transmission. For example, as shown in FIG. 7, an active switch responsible for data exchange between DCs in the DC 1 performs data transmission with an active switch responsible for data exchange between DCs in the DC 2 through a long-distance optical fiber, and a standby switch responsible for data exchange between DCs in the DC 1 performs data transmission with a standby switch responsible for data exchange between DCs in the DC 2 through the long-distance optical fiber.

For example, the first communication apparatus 601 in FIG. 6 may be the active switch responsible for data exchange between DCs in the DC 1 in FIG. 7, and the second communication apparatus 602 in FIG. 6 may be the active switch responsible for data exchange between DCs in the DC 2 in FIG. 7. Alternatively, the first communication apparatus 601 in FIG. 6 may be the standby switch responsible for data exchange between DCs in the DC 1 in FIG. 7, and the second communication apparatus 602 in FIG. 6 may be the standby switch responsible for data exchange between DCs in the DC 2 in FIG. 7.

Optionally, a related function of the first communication apparatus or the second communication apparatus in this embodiment of this application may be implemented by one device, may be jointly implemented by a plurality of devices, or may be implemented by one or more functional modules in one device. This is not specifically limited in this embodiment of this application. It may be understood that the foregoing function may be a network element in a hardware device, a software function run on dedicated hardware, a combination of hardware and software, or a virtualization function instantiated on a platform (for example, a cloud platform).

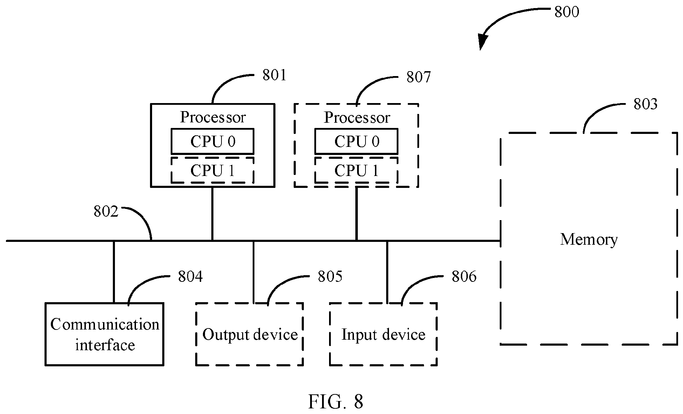

For example, the related function of the first communication apparatus or the second communication apparatus in this embodiment of this application may be implemented by using a communication apparatus 800 in FIG. 8.

FIG. 8 is a schematic diagram of a structure of a communication apparatus 800 according to an embodiment of this application. The communication apparatus 800 includes one or more processors 801, a communication line 802, and at least one communication interface (in FIG. 8, only an example in which a communication interface 804 and one processor 801 are included is used for description). Optionally, the communication apparatus 800 may further include a memory 803.

The processor 801 may be a CPU, a microprocessor, an application-specific integrated circuit (application-specific integrated circuit, ASIC), or one or more integrated circuits configured to control program execution in the solution of this application.

The communication line 802 may include a path for connecting different components.

The communication interface 804 may be a transceiver module configured to communicate with another device or a communication network, for example, the Ethernet, a RAN, or a WLAN. For example, the transceiver module may be an apparatus such as a transceiver or a transceiver machine. Optionally, the communication interface 804 may alternatively be a transceiver circuit located in the processor 801, to implement signal input and signal output of the processor.

The memory 803 may be an apparatus with a storage function, for example, may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), or a compact disc read-only memory (compact disc read-only memory, CD-ROM) or another optical disk storage, optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in a form of an instruction or a data structure and accessible by a computer. The memory may exist independently, and is connected to the processor through the communication line 802. Alternatively, the memory may be integrated with the processor.

The memory 803 is configured to store computer-executable instructions for performing the solutions of this application, and the processor 801 controls execution. The processor 801 is configured to execute the computer-executable instructions stored in the memory 803, to implement a transmission control method provided in embodiments of this application.

Alternatively, in this embodiment of this application, the processor 801 may perform a processing-related function in a transmission control method provided in the following embodiment of this application, and the communication interface 804 is responsible for communication with the another device or the communication network. This is not specifically limited in this embodiment of this application.

The computer-executable instruction in this embodiment of this application may also be referred to as application program code. This is not specifically limited in this embodiment of this application.

In specific implementation, in an embodiment, the processor 801 may include one or more CPUs, for example, a CPU 0 and a CPU 1 in FIG. 8.

In specific implementation, in an embodiment, the communication apparatus 800 may include a plurality of processors, for example, the processor 801 and a processor 807 in FIG. 8. Each of these processors may be a single-core (single-CPU) processor or a multi-core (multi-CPU) processor. The processor herein may be one or more devices, circuits, and/or processing cores configured to process data (for example, computer program instructions).

In specific implementation, in an embodiment, the communication apparatus 800 may further include an output device 805 and an input device 806. The output device 805 communicates with the processor 801, and may display information in a plurality of manners.

The communication apparatus 800 may be a general-purpose apparatus or a dedicated apparatus. For example, the communication apparatus 800 may be a desktop computer, a portable computer, a network server, a personal digital assistant (personal digital assistant, PDA), a mobile phone, a tablet computer, a wireless terminal apparatus, an in-vehicle terminal apparatus, an embedded device, or a device of a structure similar to that in FIG. 8. A type of the communication apparatus 800 is not limited in this embodiment of this application.

The following describes in detail the transmission control method provided in embodiments of this application with reference to FIG. 1 to FIG. 8.

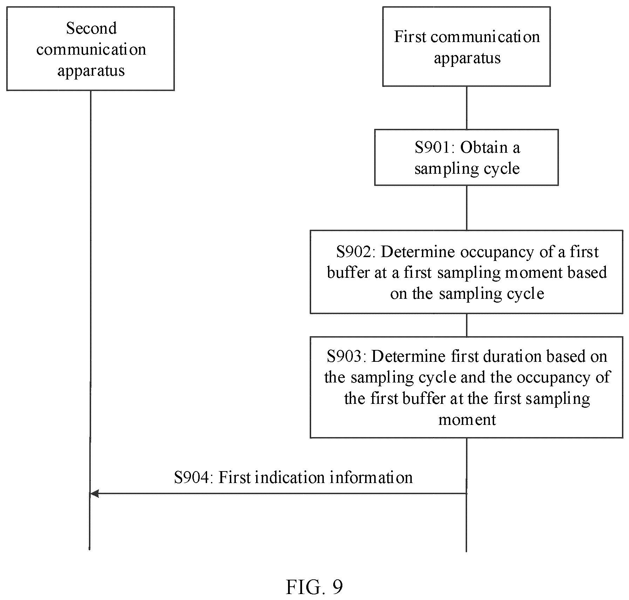

FIG. 9 shows the transmission control method according to an embodiment of this application. The transmission control method includes the following steps.

S901: A first communication apparatus obtains a sampling cycle. The sampling cycle is a time interval at which the first communication apparatus samples occupancy of a first buffer. The first buffer is used to store a data packet of a first priority.

In this embodiment of this application, HDRM is preconfigured for the data packet of the first priority, and a size of the HDRM is one BDP. A value of the BDP may be manually calculated with reference to the IEEE802.1Qbb standard, or a value of the BDP may be obtained by using an automatic measurement method. This is not limited in this application. Optionally, the first communication apparatus may further obtain a data receiving rate *s* of the first communication apparatus, and calculate, based on a value of *s* and the determined value of the BDP, a unidirectional transmission delay *T* of data transmission between the first communication apparatus and the second communication apparatus. For example, *T = BDP* / (2**s*)*.*

Optionally, in this embodiment of this application, first buffer space whose size is *b*ₘₐₓᵢₘᵤₘ may be further preconfigured. This is not specifically limited in this embodiment of this application.

S902: The first communication apparatus determines occupancy of the first buffer at a first sampling moment based on the sampling cycle.

S903: The first communication apparatus determines first duration based on the sampling cycle and the occupancy of the first buffer at the first sampling moment. The first duration is duration for which a second communication apparatus stops sending data to the first communication apparatus.

In a possible implementation, the first duration is less than or equal to the sampling cycle. The second communication apparatus is allowed to send the data packet of the first priority to the first communication apparatus in a first sampling cycle other than the first duration. Therefore, compared with an existing technical solution in which the first communication apparatus allows the second communication apparatus to send the data packet of the first priority only when the occupancy of the first buffer decreases to a threshold *X*ₒₙ, in the transmission control method provided in this application, the second communication apparatus may be allowed in advance to send the data packet of the first priority, to ensure that a receive end continuously outputs data packets.

In a possible implementation, when the occupancy of the first buffer at the first sampling moment is greater than *b*ₘₐₓᵢₘᵤₘ - (2*T+t*) ** s* , the first communication apparatus determines the first duration based on the sampling cycle and the occupancy of the first buffer at the first sampling moment. A value of *b*ₘₐₓᵢₘᵤₘ - (2*T+t*) ** s* is equal to 0 or tends to 0. *b*ₘₐₓᵢₘᵤₘ indicates the size of the first buffer. *s* indicates the data receiving rate of the first communication apparatus. *t* indicates the sampling cycle. *T* indicates the unidirectional transmission delay of data transmission between the first communication apparatus and the second communication apparatus.

In the transmission control method provided in this application, the value of *b*ₘₐₓᵢₘᵤₘ - (2*T+t*) ** s* is equal to 0 or tends to 0. In other words, a value of *b*ₘₐₓᵢₘᵤₘ may be (2*T +t*) * *s ,* or a value of *b*ₘₐₓᵢₘᵤₘ may be slightly greater than (2*T+t*)**s .* One BDP defined in the conventional technology is *2T * s ,* a value of the sampling cycle *t* is small, and a value of *t*s* is approximately 0, so that the value of *b*ₘₐₓᵢₘᵤₘ is approximately one BDP. Compared with an existing PFC mechanism that needs buffer space whose size is at least two BDPs, this solution requires only buffer space whose size is approximately one BDP. Therefore, in this solution, a requirement on the size of the buffer space can be reduced. In this way, on the one hand, in a long-distance lossless transmission scenario, a chip including the first communication apparatus has a constant buffer space size, and when buffer space between a transmit port and a receive port of the first communication apparatus is approximately half of that in the conventional technology, a quantity of long-distance lossless ports that can be supported by the chip is approximately doubled. On the other hand, the buffer space that is approximately half of that in the conventional technology reduces time for data transmission in the first communication apparatus by half, about 2T, and therefore, a dynamic delay can be reduced, to ensure that service performance is not affected.

Optionally, in this embodiment of this application, when the first sampling moment is a *j*^{th} sampling moment, and *j* is a positive integer, the first duration satisfies the following formula (3): ${t}_{stop} \left(j\right) = t - \left(\left({b}_{maximum}-b\left(j\right)\right)/s-acc_2T\left(j\right)\right)$ Formula (3)

*t*ₛₜₒₚ (*j*) indicates first duration determined at the *j* ^{th} sampling moment. *t* indicates the sampling cycle. *b*ₘₐₓᵢₘᵤₘ indicates the size of the first buffer. *s* indicates the data receiving rate of the first communication apparatus. *b*(*j*) indicates occupancy of the first buffer at the *j* ^{th} sampling moment. *acc_*2*T (j)* indicates cumulative time for which the second communication apparatus is allowed to send a data packet within 2*T* time before the *j*^{th} sampling moment.

In this embodiment of this application, the first communication apparatus periodically calculates, based on the occupancy of the first buffer, the first duration for which the second communication apparatus stops data sending. At the *j*^{th} sampling moment, if a value of *b*(*j*) is large, a value of *b*ₘₐₓᵢₘᵤₘ - *b*(*j*) is small. Correspondingly, a value of (*b*ₘₐₓᵢₘᵤₘ *- b*(*j*)) / *s - acc _*2*T*(*j*) is also small, and a value of *t*ₛₜₒₚ(*j*) is large. On the contrary, if a value of *b*(*j*) is small, a value of *t*ₛₜₒₚ (*j*) is also small. In other words, if the occupancy of the first buffer is low, the duration for which the second communication apparatus stops data sending is long; or if the occupancy of the first buffer is low, the duration for which the second communication apparatus stops data sending is short. Therefore, according to the transmission control method provided in this application, the second communication apparatus can be dynamically controlled, in real time based on the occupancy of the first buffer, to stop sending or send data.

Refer to Formula (3). In the formula for calculating the first duration, *t*, *b*ₘₐₓᵢₘᵤₘ , and *s* are constant values, and *b*(*j*) indicates the occupancy of the first buffer sampled at the *j*^{th} sampling moment. Therefore, a value of *acc_*2*T* (*j*) needs to be calculated, to calculate *t*ₛₜₒₚ (*j*).

Optionally, in this embodiment of this application, the value of *acc_*2*T (j)* may be iteratively calculated. In a possible implementation, when *j* > 2*, acc*_2*T (j)* satisfies the following formula (4): $acc - 2 T \left(j\right) = acc _ 2 T \left(j-1\right) - acc \left[\left(j-1\right)%n\right] \left(j-1\right) + t - {t}_{stop} \left(j-1\right) , n = 2 T / t$ Formula (4)

*acc*[( *j -*1)%*n*] ( *j -1)* satisfies the following formula (5): $acc \left[\left(j-1\right)%n\right] \left(j-1\right) = t - {t}_{stop} \left(j-2\right)$ Formula (5)

*acc_2T* (*j -1)* indicates cumulative time for which the second communication apparatus is allowed to send a data packet within 2*T* time before a (*j* -1)^{th} sampling moment. *acc*[(*j* -1) %*n*] (*j* -1) indicates time for which the second communication apparatus is allowed to send a data packet at a ((*j -* 1)%*n*)^{th} sampling moment within *2T* time before the (*j* -1)^{th} sampling moment. (*j -*1)%*n* indicates a remainder obtained by dividing *j-*1 by *n . t* indicates the sampling cycle. When *j =*1 , *acc_*2*T* (1) *=* 2*T* , *acc*[*i*](*1*) *= t* , and *i =* 0,1,*......, n-1* ; or when *j*=2 , *acc_*2*T*(*2*) *= acc_*2*T*(1)*-acc*[1](1)*+t-t*_{*s*top} (1) . *t*ₛₜₒₚ (*j* - 1) indicates first duration determined at the ( *j*-1)^{th} sampling moment. *t*ₛₜₒₚ (*j* - 2) indicates first duration determined at a (*j*-2)^{th} sampling moment.

The following provides an example in which *acc_*2*T*( *j* ) is iteratively calculated.

For example, when *n* = 2*T* / *t =*1000*µs* / 10*µs* =100*,*

for a 101^{st} sampling moment, that is, when *j*=101, *acc_*2*T*(101) satisfies the following formula (6): $acc _ 2 T \left(101\right) = acc _ 2 T \left(100\right) - acc \left[0\right] \left(100\right) + t - {t}_{stop} \left(100\right)$ Formula (6)

*acc*_2*T* (100) and *t*ₛₜₒₚ (100) are both calculated at a 100^{th} sampling moment. *acc*[0](100) satisfies the following formula (7): $acc \left[0\right] \left(100\right) = t - {t}_{stop} \left(99\right)$ Formula (7)

*tₛₜₒₚ*(99) is calculated at a 99^{th} sampling moment.

For a 102^{nd} sampling moment, that is, when *j =* 102 , *acc_*2*T* (102) satisfies the following formula (8): $acc _ 2 T \left(102\right) = acc _ 2 T \left(101\right) - acc \left[1\right] \left(101\right) + t - {t}_{stop} \left(101\right)$ Formula (8)

*acc_*2*T* (101) and *t*ₛₜₒₚ (101) are both calculated at the 101^{st} sampling moment. *acc*[1](101) satisfies the following formula (9): $acc \left[1\right] \left(101\right) = t - {t}_{stop} \left(100\right)$ Formula (9)

*t*ₛₜₒₚ (100) is calculated at the 100^{th} sampling moment.

For a 103^{rd} sampling moment, that is, when *j=*103, *acc*_2*T* (103) satisfies the following formula (10): $acc _ 2 T \left(103\right) = acc _ 2 T \left(102\right) - acc \left[2\right] \left(102\right) + t - {t}_{stop} \left(102\right)$ Formula (10)

*acc_*2*T* (102) and *t*ₛₜₒₚ (102) are both calculated at the 102^{nd} sampling moment. *acc*[2](102) satisfies the following formula (11): $acc \left[2\right] \left(102\right) = t - {t}_{stop} \left(101\right)$ Formula (11)

*t*ₛₜₒₚ (101) is calculated at the 101^{st} sampling moment.

S904: The first communication apparatus sends first indication information to the second communication apparatus based on the first duration. Correspondingly, the second communication apparatus receives the first indication information from the first communication apparatus. The first indication information is used to control the duration for which the second communication apparatus stops sending data to the first communication apparatus.

For example, the first indication information may be carried in a PFC stop frame. The PFC stop frame is a PFC frame in which a count value in a time field corresponding to the first priority is not 0.

Optionally, that the first communication apparatus sends first indication information to the second communication apparatus includes: When the first duration is greater than 0, the first communication apparatus sends first indication information 0 to the second communication apparatus. In this solution, only when the first duration is greater than 0, the first communication apparatus sends the first indication information to the second communication apparatus, to control the second communication apparatus to stop data packet sending. When the first duration is equal to 0, the second communication apparatus does not need to stop data sending.

Optionally, the transmission control method provided in this embodiment of this application may further include: The first communication apparatus starts a timer whose timing duration is the first duration. When the timer expires, the first communication apparatus sends second indication information to the second communication apparatus. The second indication information indicates the second communication apparatus to send a data packet. In this solution, a moment at which the second communication apparatus sends a data packet to the first communication apparatus is controlled by using a timing function of the first communication apparatus, so that when the second communication apparatus does not have the timing function, the second communication apparatus can send the data packet to the first communication apparatus in time.

In a possible implementation, in this embodiment of this application, the first indication information is the first duration. In other words, the second communication apparatus may continue to send data after stopping data sending for the first duration based on the first indication information. In this solution, after the first communication apparatus sends the first indication information to the second communication apparatus, the second communication apparatus may not need to be triggered again, through signaling transmission, to resume data packet sending, so that signaling overheads can be reduced.

It should be noted that the duration in this embodiment of this application may be a length of a time period, for example, 5.12 µs. Alternatively, the duration in this embodiment of this application may be a count value corresponding to a length of a time period. For example, for a PFC frame, duration may be a count value that corresponds to 5.12 µs and that is in the time field corresponding to the first priority. If a rate of receiving and sending data between the transmit end and the receive end is 100 Gbps, the count value corresponding to 5.12 µs is 5.12 µs*100 Gbps/512 b=1074.

In another possible implementation, in this embodiment of this application, when the first communication apparatus starts the timer whose timing duration is the first duration, the first indication information is second duration. The second duration is maximum duration for which the second communication apparatus is allowed to stop data packet sending. In this solution, the first indication information is a time field in the PFC stop frame sent by the receive end to the transmit end in the conventional technology if the space occupied by a data packet at the receive end reaches the threshold *X*_{off} . Content of communication between the first communication apparatus and the second communication apparatus is the same as that in the conventional technology, so that compatibility with an existing protocol may be improved.

For example, if the first indication information is carried in the PFC stop frame, the second duration may be a maximum count value, that is, 65535.

Optionally, the transmission control method provided in this embodiment of this application may further include: When the first duration is equal to 0, the first communication apparatus sends the second indication information to the second communication apparatus. The second indication information indicates the second communication apparatus to send a data packet. The duration for which the second communication apparatus stops data sending is very short, so that the second communication apparatus is allowed to send data, to ensure continuity of receiving data packets by the receive end within a specific error range.

For example, the second indication information may be carried in a PFC transmit frame. The PFC transmit frame is a PFC frame in which a count value in a time field corresponding to the first priority is 0.

In the transmission control method provided in this application, the first communication apparatus periodically samples the occupancy of the first buffer, and determines the first duration based on the sampling cycle and the sampled occupancy of the first buffer. The value of the sampling cycle is small, so that based on this solution, the second communication apparatus can be controlled, at a finer granularity, to stop sending or send the data packet of the first priority.

Both the first communication apparatus and the second communication apparatus in the foregoing embodiment may use the architecture of the communication apparatus 800 shown in FIG. 8. Therefore, actions of the first communication apparatus in the foregoing embodiment may be performed by the first communication apparatus indicated by the processor 801 in the communication apparatus 800 shown in FIG. 8 by invoking the application program code stored in the memory 803, and actions of the second communication apparatus in the foregoing embodiment may be performed by the second communication apparatus indicated by the processor 801 in the communication apparatus 800 shown in FIG. 8 by invoking the application program code stored in the memory 803. This is not limited in this embodiment.

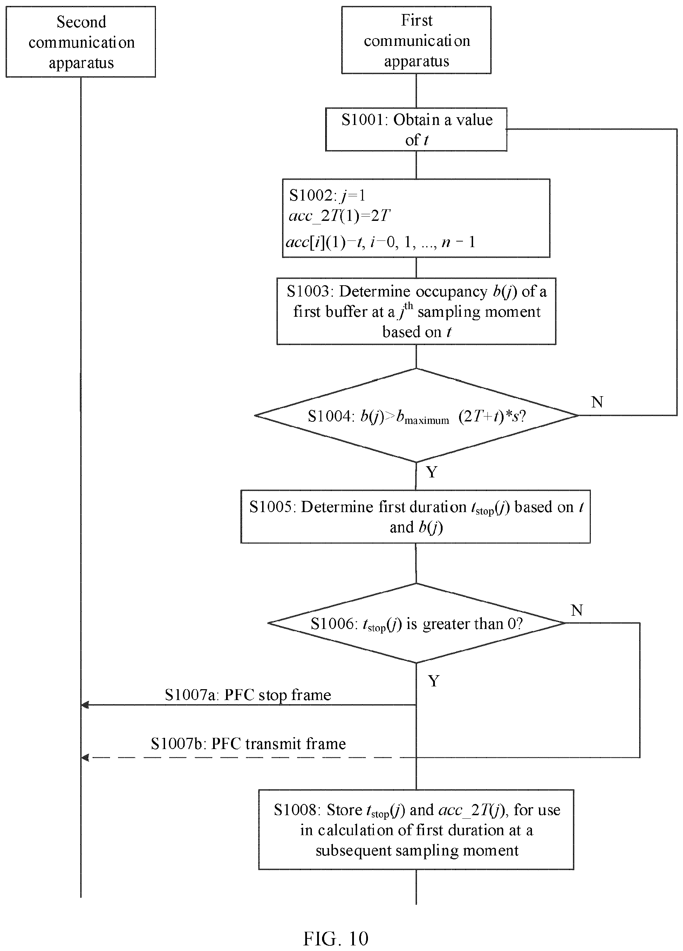

With reference to FIG. 4, in FIG. 5, the moment e to the transmission control method in FIG. 9, FIG. 10 shows a specific example of the transmission control method provided in this application. An example in which the first sampling moment is the *j* ^{th} sampling moment is used. The example specifically includes the following steps.

S1001: The first communication apparatus obtains the sampling cycle *t*.

For related descriptions of step S1001, refer to step S901 in the embodiment shown in FIG. 9. Details are not described herein again.

S1002: The first communication apparatus may set an initial value of *j* to 1. The first communication apparatus may set an initial value *acc_*2*T*(1) of *acc_*2*T* to *2T,* and set an initial value *acc*[i](1) of *acc*[*i*] to *t.*

S1003: The first communication apparatus determines the occupancy *b*(*j*) of the first buffer at the *j* ^{th} sampling moment based on the sampling cycle *t* .

S1004: The first communication apparatus determines whether *b*(*j*) is greater than *b*ₘₐₓᵢₘᵤₘ - *(2T+t)* * *s* . The value of *b*ₘₐₓᵢₘᵤₘ - (2*T*+*t*)* *s* is equal to 0 or tends to 0.

If *b*(*j*) is greater than *b*ₘₐₓᵢₘᵤₘ *-*(2*T+t*)**s* , the first communication apparatus performs the following step S1005; or if *b*(*j*) is less than or equal to *b*ₘₐₓᵢₘᵤₘ *-*(2*T+t*)**s* , the first communication apparatus performs the foregoing step S1001 or S1002.

S1005: The first communication apparatus determines the first duration *t*ₛₜₒₚ (*j*) based on the sampling cycle *t* and the occupancy *b*(*j*) of the first buffer at the first sampling moment. The first duration *t*ₛₜₒₚ(*j*) is duration for which the second communication apparatus stops sending data to the first communication apparatus. The first duration *t*ₛₜₒₚ(*j*) is less than or equal to the sampling cycle.

In this embodiment of this application, for a process of determining the first duration *t*ₛₜₒₚ(*j*), refer to related descriptions of step S903. Details are not described herein again.

S1006: The first communication apparatus determines whether *b*(*j*) is greater than 0.

If *b*(*j*) is greater than 0, the following step S1007a is performed.

If *b*(*j*) is equal to 0, the following step S1007b is performed, or the first communication apparatus skips step S1007b, and directly performs step S1008.

S1007a: The first communication apparatus sends the first indication information to the second communication apparatus based on the first duration. Correspondingly, the second communication apparatus receives the first indication information from the first communication apparatus. The first indication information is used to control the duration for which the second communication apparatus stops sending data to the first communication apparatus.

For example, as shown in FIG. 10, the first indication information may be carried in the PFC stop frame. The first indication information may be the first duration, and correspondingly, the count value in the time field that is of the PFC stop frame and that corresponds to the first priority is the first duration. Alternatively, the first indication information is the second duration, and correspondingly, the count value in the time field that is of the PFC stop frame and that corresponds to the first priority is the second duration. This is not limited in this application.

S1007b: The first communication apparatus sends the second indication information to the second communication apparatus. Correspondingly, the second communication apparatus receives the second indication information from the first communication apparatus. The second indication information indicates the second communication apparatus to send a data packet.

For example, as shown in FIG. 10, the first indication information may be carried in the PFC transmit frame.

S1008: The first communication apparatus stores the first duration *t*ₛₜₒₚ(*j*) and *acc_*2*T* (*j*) that are calculated this time, for use in calculation of first duration at a subsequent sampling moment.

For technical effects of the transmission control method provided in the embodiment shown in FIG. 10, refer to the descriptions of the technical effects of the embodiment shown in FIG. 9. Details are not described herein again.

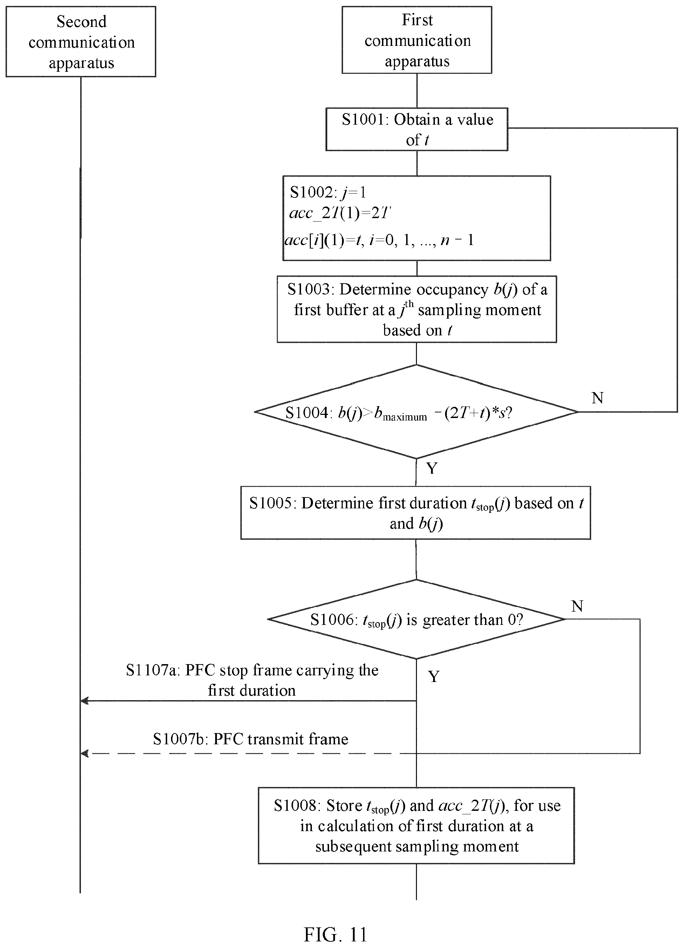

With reference to FIG. 10, FIG. 11 shows an example in which the first indication information is the first duration. This example may be used in a case in which the second communication apparatus has the timing function. A difference between the example shown in FIG. 11 and the example shown in FIG. 10 lies in the following step.

S1107a: The first communication apparatus sends the first indication information to the second communication apparatus. Correspondingly, the second communication apparatus receives the first indication information from the first communication apparatus. The first indication information is used to control the duration for which the second communication apparatus stops sending data to the first communication apparatus. The first indication information is the first duration.

For example, as shown in FIG. 11, the first indication information may be carried in the PFC stop frame. The count value in the time field that is of the PFC stop frame and that corresponds to the first priority is the first duration.

It should be noted that in this embodiment of this application, the first duration may be the first duration *t*ₛₜₒₚ (*j*) determined in step S1005, or may be a count value corresponding to *t*ₛₜₒₚ (*j*).

With reference to the foregoing example, when the second communication apparatus has the timing function, the first communication apparatus may directly send the first duration to the second communication apparatus. After stopping data sending for the first duration, the second communication apparatus can automatically resume data packet sending, so that the second communication apparatus does not need to be triggered again, through signaling transmission, to resume data packet sending. Therefore, signaling can be reduced.

For technical effects of the transmission control method provided in the embodiment shown in FIG. 11, refer to the descriptions of the technical effects of the embodiment shown in FIG. 9. Details are not described herein again.

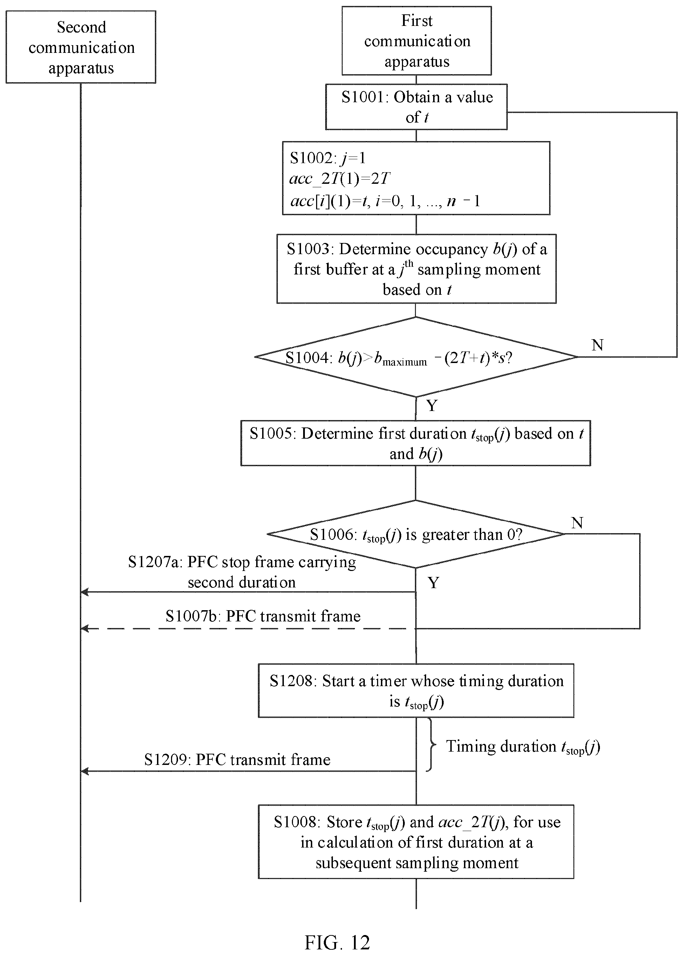

With reference to FIG. 10, FIG. 12 shows an example in which the first indication information is the second duration. This example may be used in a case in which the second communication apparatus does not have the timing function. A difference between the example shown in FIG. 12 and the example shown in FIG. 10 lies in the following steps.

S1207a: The first communication apparatus sends the first indication information to the second communication apparatus. Correspondingly, the second communication apparatus receives the first indication information from the first communication apparatus. The first indication information is used to control the duration for which the second communication apparatus stops sending data to the first communication apparatus. The first indication information is the second duration.

For example, as shown in FIG. 12, the first indication information may be carried in the PFC stop frame. The count value in the time field that is of the PFC stop frame and that corresponds to the first priority is 65535. In other words, the second duration is the maximum count value, that is, 65535.

S1208: The first communication apparatus starts the timer whose timing duration is the first duration *t*ₛₜₒₚ (*j*).

When the timer expires, the following step S1209 is performed.

S1209: The first communication apparatus sends the second indication information to the second communication apparatus. Correspondingly, the second communication apparatus receives the second indication information from the first communication apparatus. The second indication information indicates the second communication apparatus to send a data packet.

For example, as shown in FIG. 12, the second indication information may be carried in the PFC transmit frame.

For technical effects of the transmission control method provided in the embodiment shown in FIG. 12, refer to the descriptions of the technical effects of the embodiment shown in FIG. 9. Details are not described herein again.

It may be understood that in the foregoing embodiments, the method and/or steps implemented by the first communication apparatus may also be implemented by a part (for example, a chip or a circuit) that may be used in the first communication apparatus. The method and/or steps implemented by the second communication apparatus may also be implemented by a part (for example, a chip or a circuit) that may be used in the second communication apparatus.

The foregoing mainly describes the solutions provided in embodiments of this application from the perspective of interaction between network elements. Correspondingly, an embodiment of this application further provides a communication apparatus. The communication apparatus is configured to implement the foregoing methods. The communication apparatus may be the first communication apparatus in the foregoing method embodiment, an apparatus including the foregoing first communication apparatus, or a part that may be used in the first communication apparatus. Alternatively, the communication apparatus may be the second communication apparatus in the foregoing method embodiment, an apparatus including the foregoing second communication apparatus, or a part that may be used in the second communication apparatus. It may be understood that the communication apparatus includes a corresponding hardware structure and/or software module that performs each function, to implement the foregoing functions. A person skilled in the art should be easily aware that units and algorithm steps in the examples described with reference to embodiments disclosed in this specification may be implemented in a form of hardware or in a form of a combination of hardware and computer software in this application. Whether a function is performed by hardware or by hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It is to be noted that in embodiments of this application, module division is an example, and is merely a logical function division. During actual implementation, another division manner may be used.

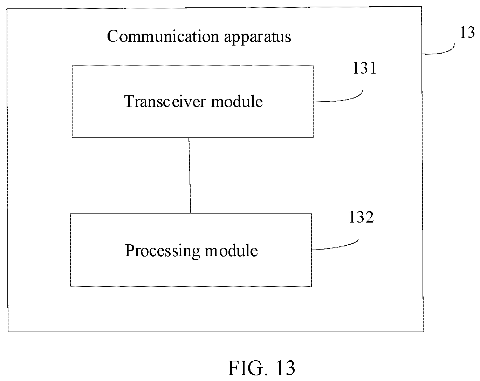

FIG. 13 is a schematic diagram of a structure of a communication apparatus 13. The communication apparatus 13 includes a transceiver module 131 and a processing module 132. The transceiver module 131 may also be referred to as a transceiver unit, and is configured to implement a transceiver function. For example, the transceiver module may be a transceiver circuit, a transceiver machine, a transceiver, or a communication interface.

For example, the communication apparatus 13 is the first communication apparatus in the foregoing method embodiment. In this case:
the processing module 132 is configured to obtain a sampling cycle. The sampling cycle is a time interval at which the first communication apparatus samples occupancy of a first buffer. The first buffer is used to store a data packet of a first priority. The processing module 132 is further configured to determine occupancy of the first buffer at a first sampling moment based on the sampling cycle. The processing module 132 is further configured to determine first duration based on the sampling cycle and the occupancy of the first buffer at the first sampling moment. The first duration is duration for which a second communication apparatus stops sending data to the first communication apparatus. The transceiver module 131 is configured to send first indication information to the second communication apparatus based on the first duration. The first indication information is used to control the duration for which the second communication apparatus stops sending data to the first communication apparatus.

In a possible implementation, the processing module 132 is further configured to: start a timer whose timing duration is the first duration; and when the timer expires, send second indication information to the second communication apparatus by using the transceiver module 131. The second indication information indicates the second communication apparatus to send a data packet.

In a possible implementation, that the processing module 132 is further configured to determine the first duration based on the sampling cycle and the occupancy of the first buffer at the first sampling moment includes: when the occupancy of the first buffer at the first sampling moment is greater than *b*ₘₐₓᵢₘᵤₘ *-* (2*T+t*) **s* , determining the first duration based on the sampling cycle and the occupancy of the first buffer at the first sampling moment. A value of *b*ₘₐₓᵢₘᵤₘ - (2*T+t*) ** s* is equal to 0 or tends to 0. *b*ₘₐₓᵢₘᵤₘ indicates a size of the first buffer. *s* indicates a data receiving rate of the first communication apparatus. *t* indicates the sampling cycle. *T* indicates a unidirectional transmission delay of data transmission between the first communication apparatus and the second communication apparatus.

In a possible implementation, that the transceiver module 131 is configured to send the first indication information to the second communication apparatus includes: when the first duration is greater than 0, sending the first indication information to the second communication apparatus.

In a possible implementation, the transceiver module 131 is further configured to: when the first duration is equal to 0, send the second indication information to the second communication apparatus. The second indication information indicates the second communication apparatus to send a data packet.

All related content of each step in the foregoing method embodiment may be cited in function descriptions of a corresponding functional module. Details are not described herein again.

In this embodiment, the communication apparatus 13 is presented in a form of functional modules obtained through integration. The "module" herein may be a specific ASIC, a circuit, a processor that executes one or more software or firmware programs, a memory, an integrated logic circuit, and/or another device capable of providing the foregoing functions.

When the communication apparatus 13 is the first communication apparatus or the second communication apparatus in the foregoing method embodiment, in a simple embodiment, a person skilled in the art may figure out that the communication apparatus 13 may be in a form of the communication apparatus 800 shown in FIG. 8.

For example, the processor 801 or 807 in the communication apparatus 800 shown in FIG. 8 may invoke the computer-executable instructions stored in the memory 803, so that the communication apparatus 800 performs the transmission control method in the foregoing method embodiment. Specifically, a function/implementation process of the processing module 132 in FIG. 13 may be implemented by the processor 801 or 807 in the communication apparatus 800 shown in FIG. 8 by invoking the computer-executable instructions stored in the memory 803. A function/implementation process of the transceiver module 131 in FIG. 13 may be implemented by using the communication module connected through the communication interface 804 in FIG. 8.

The communication apparatus 13 provided in this embodiment may perform the foregoing transmission control method. Therefore, for technical effects that can be achieved by the communication apparatus 13, refer to the foregoing method embodiment. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in a memory. A processor may be configured to execute the program instruction and implement the foregoing method procedures. The processor may be built into a SoC (system-on-a-chip) or an ASIC, or may be an independent semiconductor chip. In addition to cores configured to execute software instructions to perform operations or processing, the processor may further include a necessary hardware accelerator, for example, a field programmable gate array (field programmable gate array, FPGA), a PLD (programmable logic device), or a logic circuit implementing a dedicated logical operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may perform the foregoing method procedures by running necessary software or independently of software.

Optionally, an embodiment of this application further provides a chip system, including at least one processor and an interface. The at least one processor is coupled to a memory through the interface. When the at least one processor executes a computer program or instructions in the memory, the method according to any one of the foregoing method embodiments is performed. In a possible implementation, the communication apparatus further includes the memory. Optionally, the chip system may include a chip, or may include a chip and another discrete device. This is not specifically limited in this embodiment of this application.

All or some of the foregoing embodiments may be implemented by software, hardware, firmware, or any combination thereof. When implemented by a software program, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of plurality. A single processor or another unit may implement several functions enumerated in the claims. Some measures are set forth in dependent claims that are different from each other, but this does not mean that these measures cannot be combined to achieve good effects.

## Claims

1. A transmission control method, comprising:
obtaining (S901), by a first communication apparatus (601), a sampling cycle, wherein the sampling cycle is a time interval at which the first communication apparatus samples occupancy of a first buffer, and the first buffer is used to store a data packet of a first priority;
determining (S902), by the first communication apparatus, occupancy of the first buffer at a first sampling moment based on the sampling cycle;
determining (S903), by the first communication apparatus, first duration based on the sampling cycle and the occupancy of the first buffer at the first sampling moment, wherein the first duration is duration for which a second communication apparatus stops sending data to the first communication apparatus; and
sending (S904), by the first communication apparatus, first indication information to the second communication apparatus based on the first duration, wherein the first indication information is used to control the duration for which the second communication apparatus stops sending data to the first communication apparatus,
wherein the first duration is less than or equal to the sampling cycle,
wherein when the first sampling moment is a *j*^{th} sampling moment, and *j* is a positive integer, the first duration satisfies the following first formula: ${t}_{stop} \left(j\right) = t - \left(\left({b}_{maximum}-b\left(j\right)\right)/s-acc_2T\left(j\right)\right) ,$ wherein
*t*ₛₜₒₚ (*j*) indicates first duration determined at the *j*^{th} sampling moment; *t* indicates the sampling cycle; *b*ₘₐₓᵢₘᵤₘ indicates the size of the first buffer; *s* indicates the data receiving rate of the port of the first communication apparatus, or *s* indicates the rate at which the first communication apparatus receives the data packet of the first priority; *b*(*j*) indicates occupancy of the first buffer at the *j*^{th} sampling moment; and *acc_*2*T* (*j*) indicates cumulative time for which the second communication apparatus is allowed to send a data packet within 2*T* time before the *j*^{th} sampling moment.

2. The method according to claim 1, wherein the method further comprises:
starting, by the first communication apparatus, a timer whose timing duration is the first duration; and
when the timer expires, sending, by the first communication apparatus, second indication information to the second communication apparatus, wherein the second indication information indicates the second communication apparatus to send a data packet.

3. The method according to claim 1 or 2, wherein the first indication information is the first duration.

4. The method according to claim 2, wherein the first indication information is second duration, and the second duration is maximum duration for which the second communication apparatus is allowed to stop data packet sending.

5. The method according to any one of claims 1 to 4, wherein the determining, by the first communication apparatus, first duration based on the sampling cycle and the occupancy of the first buffer at the first sampling moment comprises:
determining, by the first communication apparatus, the first duration based on the sampling cycle, the occupancy of the first buffer at the first sampling moment, and at least one of the following parameters: a data receiving rate of a port of the first communication apparatus, a rate at which the first communication apparatus receives the data packet of the first priority, cumulative time for which the second communication apparatus is allowed to send a data packet within 2*T* time before the first sampling moment, or a size of the first buffer, wherein *T* indicates a unidirectional transmission delay of data transmission between the first communication apparatus and the second communication apparatus.

6. The method according to any one of claims 1 to 5, wherein
when *j >* 2, *acc -* 2*T* (*j*) satisfies the following second formula: $acc _ 2 T \left(j\right) = acc _ 2 T \left(j-1\right) - acc \left[\left(j-1\right)%n\right] \left(j-1\right) + t - {t}_{stop} \left(j-1\right) , n = 2 T / t ,$ wherein
*acc*[( *j* - 1) %*n*](*j i-* 1) satisfies the following third formula: $acc \left[\left(j-1\right)%n\right] \left(j-1\right) = t - {t}_{stop} \left(j-2\right) ,$ wherein
*acc*[(*j* -1)%*n*](*j -*1) indicates time for which the second communication apparatus is allowed to send a data packet at a ((j-1)%*n*)^{th} sampling moment within 2*T* time before a ( *j -*1)^{th} sampling moment; (*j* -1)%*n* indicates a remainder obtained by dividing *j -*1 by *n*; when *j=*1*, acc*_2*T*(1)=2*T* , *acc*[*i*](1)*=t ,* and *i*=0,1,......, *n*-1 *,* or when *j*=2 , *acc_*2*T (2) = acc_ 2T (1) - acc*[*1*]*(1) + t* - *t*ₛₜₒₚ (1); *t*ₛₜₒₚ (*j -* 2) indicates first duration determined at a ( *j*-2)^{th} sampling moment; and *T* indicates the unidirectional transmission delay of data transmission between the first communication apparatus and the second communication apparatus.

7. The method according to any one of claims 1 to 6, wherein the method further comprises: the determining, by the first communication apparatus, first duration based on the sampling cycle and the occupancy of the first buffer at the first sampling moment comprises:
when the occupancy of the first buffer at the first sampling moment is greater than *b*ₘₐₓᵢₘᵤₘ *-* (2*T+t* ) ** s* , determining, by the first communication apparatus, the first duration based on the sampling cycle and the occupancy of the first buffer at the first sampling moment, wherein 0 ≤ *b*ₘₐₓᵢₘᵤₘ *-* (2*T+t*) ** s* ≤ *t * s* ; *b*ₘₐₓᵢₘᵤₘ indicates the size of the first buffer; *s* indicates the data receiving rate of the port of the first communication apparatus, or *s* indicates the rate at which the first communication apparatus receives the data packet of the first priority; *t* indicates the sampling cycle; and *T* indicates the unidirectional transmission delay of data transmission between the first communication apparatus and the second communication apparatus.

8. The method according to any one of claims 1 to 7, wherein the sending, by the first communication apparatus, first indication information to the second communication apparatus comprises:
when the first duration is greater than 0, sending, by the first communication apparatus, the first indication information to the second communication apparatus.

9. The method according to claim 8 when depending on claim 2, wherein the method further comprises:
when the first duration is equal to 0, sending, by the first communication apparatus, the second indication information to the second communication apparatus, wherein the second indication information indicates the second communication apparatus to send a data packet.

10. A first communication apparatus (601), comprising a memory (803) and a processor (801) coupled to the memory, wherein the memory is configured to store a program; the processor is configured to execute the program stored in the memory; and when the communication apparatus runs, the processor runs the program, so that the first communication apparatus performs the method according to any one of claims 1 to 9.

11. A computer-readable storage medium, wherein the computer-readable storage medium stores a computer program; and when the computer program is executed by a computer, the computer is enabled to perform the method according to any one of claims 1 to 9.

12. A computer program product including instructions, wherein when the computer program product is executed by a computer, the computer is enabled to perform the method according to any one of claims 1 to 9.

## Patentansprüche

1. Übertragungssteuerungsverfahren, umfassend:
Erlangen (S901) eines Abtastzyklus durch eine erste Kommunikationsvorrichtung (601), wobei der Abtastzyklus ein Zeitintervall ist, in dem die erste Kommunikationsvorrichtung eine Belegung eines ersten Puffers abtastet, und der erste Puffer zum Speichern eines Datenpakets erster Priorität verwendet wird;
Bestimmen (S902) einer Belegung des ersten Puffers zu einem ersten Abtastzeitpunkt basierend auf dem Abtastzyklus durch die erste Kommunikationsvorrichtung;
Bestimmen (S903) einer ersten Dauer basierend auf dem Abtastzyklus und der Belegung des ersten Puffers zu dem ersten Abtastzeitpunkt durch die erste Kommunikationsvorrichtung, wobei die erste Dauer eine Dauer ist, für die eine zweite Kommunikationsvorrichtung ein Senden von Daten an die erste Kommunikationsvorrichtung unterbricht; und
Senden (S904) erster Angabeinformationen basierend auf der ersten Dauer durch die erste Kommunikationsvorrichtung an die zweite Kommunikationsvorrichtung, wobei die ersten Angabeinformationen dazu verwendet werden, die Dauer zu steuern, für welche die zweite Kommunikationsvorrichtung ein Senden von Daten an die erste Kommunikationsvorrichtung unterbricht,
wobei die erste Dauer kleiner als der Abtastzyklus oder gleich diesem ist,
wobei, wenn der erste Abtastzeitpunkt ein *j*^{-ter} Abtastzeitpunkt ist und *j* eine positive ganze Zahl ist, die erste Dauer die folgende erste Formel erfüllt: ${t}_{stop} \left(j\right) = t - \left(\left({b}_{maximum}-b\left(j\right)\right)/s-acc_2T\left(j\right)\right) ,$ wobei
*t*ₛₜₒₚ (*j*) eine erste Dauer angibt, die zu dem *j*^{-ten} Abtastzeitpunkt bestimmt wird; *t* den Abtastzyklus angibt; *b*ₘₐₓᵢₘᵤₘ die Größe des ersten Puffers angibt; *s* die Datenempfangsrate des Anschlusses der ersten Kommunikationsvorrichtung angibt oder *s* die Rate angibt, mit welcher die erste Kommunikationsvorrichtung das Datenpaket erster Priorität empfängt; *b*(*j*) eine Belegung des ersten Puffers zu dem *j*^{-ten} Abtastzeitpunkt angibt; und *acc*_2*T*(*j*) eine kumulative Zeit angibt, für welche die zweite Kommunikationsvorrichtung innerhalb einer Zeit von 2*T* vor dem *j*^{-ten} Abtastzeitpunkt ein Datenpaket senden darf.

2. Verfahren nach Anspruch 1, wobei das Verfahren ferner Folgendes umfasst:
Starten eines Zeitgebers, bei dessen Zeitgeberdauer es sich um die erste Dauer handelt, durch die erste Kommunikationsvorrichtung; und
wenn der Zeitgeber abgelaufen ist, Senden von zweiten Angabeinformationen durch die erste Kommunikationsvorrichtung an die zweite Kommunikationsvorrichtung, wobei die zweiten Angabeinformationen der zweiten Kommunikationsvorrichtung angeben, ein Datenpaket zu senden.

3. Verfahren nach Anspruch 1 oder 2, wobei es sich bei den ersten Angabeinformationen um die erste Dauer handelt.

4. Verfahren nach Anspruch 2, wobei es sich bei den ersten Angabeinformationen um die zweite Dauer handelt und die zweite Dauer eine maximale Dauer ist, für welche die zweite Kommunikationsvorrichtung ein Senden von Datenpaketen unterbrechen darf.

5. Verfahren nach einem der Ansprüche 1 bis 4, wobei das Bestimmen der ersten Dauer basierend auf dem Abtastzyklus und der Belegung des ersten Puffers zu dem ersten Abtastzeitpunkt durch die erste Kommunikationsvorrichtung Folgendes umfasst: Bestimmen der ersten Dauer basierend auf dem Abtastzyklus, der Belegung des ersten Puffers zu dem ersten Abtastzeitpunkt und mindestens einem der folgenden Parameter durch die erste Kommunikationsvorrichtung: einer Datenempfangsrate eines Anschlusses der ersten Kommunikationsvorrichtung, einer Rate, mit der die erste Kommunikationsvorrichtung das Datenpaket erster Priorität empfängt, einer kumulativen Zeit, für welche die zweite Kommunikationsvorrichtung innerhalb von einer Zeit von 2*T* vor dem ersten Abtastzeitpunkt ein Datenpaket senden darf, oder einer Größe des ersten Puffers, wobei T eine unidirektionale Übertragungsverzögerung einer Datenübertragung zwischen der ersten Kommunikationsvorrichtung und der zweiten Kommunikationsvorrichtung angibt.

6. Verfahren nach einem der Ansprüche 1 bis 5, wobei
wenn *j >* 2*, acc_*2*T*(*j*) die folgende zweite Formel erfüllt: $acc _ 2 T \left(j\right) = acc _ 2 T \left(j-1\right) - acc \left[\left(j-1\right)%n\right] \left(j-1\right) + t - {t}_{stop} \left(j-1\right) , n = 2 T / t ,$
wobei
*acc*[(*j -* 1)%*n*](*j -* 1) die folgende dritte Formel erfüllt: $acc \left[\left(j-1\right)%n\right] \left(j-1\right) = t - {t}_{stop} \left(j-2\right) ,$ wobei
*acc*[(*j -* 1)%*n*](*j - 1)* die Zeit angibt, für welche die zweite Kommunikationsvorrichtung innerhalb einer Zeit von 2*T* vor einem (j-1)ten Abtastzeitpunkt ein Datenpaket senden darf; (*j* - 1)%*n* einen Rest angibt, der durch Dividieren von *j -* 1 durch *n* erlangt wird; wenn *j =* 1, *acc_*2*T*(1) = 2*T, acc*[*i*](1) *= t* und *i =* 0,1, ......, *n* - 1 oder wenn *j =* 2*, acc_*2*T*(2) *= acc_*2*T*(1) - *acc*[1](1) *+ t* - *t*ₛₜₒₚ (1); *t*ₛₜₒₚ(*j* - 2) die erste Dauer angibt, die zu einem (j-2) ten Abtastzeitpunkt bestimmt wird; und *T* die unidirektionale Übertragungsverzögerung einer Datenübertragung zwischen der ersten Kommunikationsvorrichtung und der zweiten Kommunikationsvorrichtung angibt.

7. Verfahren nach einem der Ansprüche 1 bis 6, wobei das Verfahren ferner Folgendes umfasst: das Bestimmen der ersten Dauer basierend auf dem Abtastzyklus und der Belegung des ersten Puffers zu dem ersten Abtastzeitpunkt durch die erste Kommunikationsvorrichtung umfasst Folgendes:
wenn die Belegung des ersten Puffers zu dem ersten Abtastzeitpunkt größer als *b*ₘₐₓᵢₘᵤₘ - (2*T* + *t*) ∗ *s*, ist, Bestimmen der ersten Dauer basierend auf dem Abtastzyklus und der Belegung des ersten Puffers zu dem ersten Abtastzeitpunkt durch die Kommunikationsvorrichtung, wobei 0 ≤ *b*ₘₐₓᵢₘᵤₘ - (2*T* + *t*) ∗ *s* ≤ *t* ∗ *s*; *b*ₘₐₓᵢₘᵤₘ die Größe des ersten Puffers angibt; *s* die Datenempfangsrate des Anschlusses der ersten Kommunikationsvorrichtung angibt oder *s* die Rate angibt, mit der die erste Kommunikationsvorrichtung das Datenpaket erster Priorität empfängt; *t* den Abtastzyklus angibt; und *T* die unidirektionale Übertragungsverzögerung der Datenübertragung zwischen der ersten Kommunikationsvorrichtung und der zweiten Kommunikationsvorrichtung angibt.

8. Verfahren nach einem der Ansprüche 1 bis 7, wobei das Senden von ersten Angabeinformationen durch die erste Kommunikationsvorrichtung an die zweite Kommunikationsvorrichtung Folgendes umfasst:
wenn die erste Dauer größer als 0 ist, Senden der ersten Angabeinformationen durch die erste Kommunikationsvorrichtung an die zweite Kommunikationsvorrichtung.

9. Verfahren nach Anspruch 8 in Abhängigkeit von Anspruch 2, wobei das Verfahren ferner Folgendes umfasst:
wenn die erste Dauer gleich 0 ist, Senden der zweiten Angabeinformationen durch die erste Kommunikationsvorrichtung an die zweite Kommunikationsvorrichtung, wobei die zweiten Angabeinformationen der zweiten Kommunikationsvorrichtung angeben, ein Datenpaket zu senden.

10. Erste Kommunikationsvorrichtung (601), umfassend einen Speicher (803) und einen an den Speicher gekoppelten Prozessor (801), wobei der Speicher dazu konfiguriert ist, ein Programm zu speichern; der Prozessor dazu konfiguriert ist, das auf dem Speicher gespeicherte Programm auszuführen; und wenn die Kommunikationsvorrichtung läuft, der Prozessor das Programm laufen lässt, sodass die erste Kommunikationsvorrichtung das Verfahren gemäß einem der Ansprüche 1 bis 9 durchführt.

11. Computerlesbares Speichermedium, wobei das computerlesbare Speichermedium ein Computerprogramm speichert; und, wenn das Computerprogramm durch einen Computer ausgeführt wird, der Computer in die Lage versetzt wird, das Verfahren nach einem der Ansprüche 1 bis 9 durchzuführen.

12. Computerprogrammprodukt, beinhaltend Anweisungen, wobei, wenn das Computerprogrammprodukt durch einen Computer ausgeführt wird, der Computer in die Lage versetzt wird, das Verfahren nach einem der Ansprüche 1 bis 9 durchzuführen.

## Revendications

1. Procédé de commande de transmission, comprenant :
l'obtention (S901), par un premier appareil de communication (601), d'un cycle d'échantillonnage, dans lequel le cycle d'échantillonnage est un intervalle de temps auquel le premier appareil de communication échantillonne l'occupation d'un premier tampon, et le premier tampon est utilisé pour stocker un paquet de données d'une première priorité ;
la détermination (S902), par le premier appareil de communication, de l'occupation du premier tampon à un premier moment d'échantillonnage sur la base du cycle d'échantillonnage ;
la détermination (S903), par le premier appareil de communication, d'une première durée sur la base du cycle d'échantillonnage et de l'occupation du premier tampon au premier moment d'échantillonnage, dans lequel la première durée est la durée pendant laquelle un second appareil de communication cesse d'envoyer des données au premier appareil de communication ; et
l'envoi (S904), par le premier appareil de communication, de premières informations d'indication au second appareil de communication sur la base de la première durée, dans lequel les premières informations d'indication sont utilisées pour commander la durée pendant laquelle le second appareil de communication cesse d'envoyer des données au premier appareil de communication,
dans lequel la première durée est inférieure ou égale au cycle d'échantillonnage,
dans lequel, lorsque le premier moment d'échantillonnage est un *j*^{ème} moment d'échantillonnage, et que *j* est un entier positif, la première durée satisfait la première formule suivante : ${t}_{stop} \left(j\right) = t - \left(\left({b}_{maximum}-b\left(j\right)\right)/s-acc_2T\left(j\right)\right) ,$ dans lequel
*t*ₛₜₒₚ (*j*) indique la première durée déterminée au *j*^{ème} moment d'échantillonnage ; *t* indique le cycle d'échantillonnage ; *b*ₘₐₓᵢₘᵤₘ indique la taille du premier tampon ; *s* indique le débit de réception de données du port du premier appareil de communication, ou *s* indique le débit auquel le premier appareil de communication reçoit le paquet de données de première priorité ; *b*(*j*) indique l'occupation du premier tampon au *j*^{ème} moment d'échantillonnage ; et *acc*_2*T*(*j*) indique le temps cumulé pendant lequel le second appareil de communication est autorisé à envoyer un paquet de données dans un délai de 2*T* temps avant le *j*^{ème} moment d'échantillonnage.

2. Procédé selon la revendication 1, dans lequel le procédé comprend en outre :
le démarrage, par le premier appareil de communication, d'un minuteur dont la durée de temporisation est la première durée ; et
lorsque le minuteur expire, l'envoi, par le premier appareil de communication, de secondes informations d'indication au second appareil de communication, dans lequel les secondes informations d'indication indiquent au second appareil de communication d'envoyer un paquet de données.

3. Procédé selon la revendication 1 ou 2, dans lequel les premières informations d'indication sont la première durée.

4. Procédé selon la revendication 2, dans lequel les premières informations d'indication sont la seconde durée, et la seconde durée est la durée maximale pendant laquelle le second appareil de communication est autorisé à cesser l'envoi de paquets de données.

5. Procédé selon l'une quelconque des revendications 1 à 4, dans lequel la détermination, par le premier appareil de communication, de la première durée sur la base du cycle d'échantillonnage et de l'occupation du premier tampon au premier moment d'échantillonnage comprend :
la détermination, par le premier appareil de communication, de la première durée sur la base du cycle d'échantillonnage, de l'occupation du premier tampon au premier moment d'échantillonnage, et d'au moins l'un des paramètres suivants : un débit de réception de données d'un port du premier appareil de communication, un débit auquel le premier appareil de communication reçoit le paquet de données de la première priorité, le temps cumulé pendant lequel le second appareil de communication est autorisé à envoyer un paquet de données dans un délai de 2*T* temps avant le premier moment d'échantillonnage, ou une taille du premier tampon, dans lequel *T* indique un délai de transmission unidirectionnel de la transmission de données entre le premier appareil de communication et le second appareil de communication.

6. Procédé selon l'une quelconque des revendications 1 à 5, dans lequel
lorsque *j* > 2*,acc_*2*T*(*j*) satisfait à la deuxième formule suivante : $acc _ 2 T \left(j\right) = acc _ 2 T \left(j-1\right) - acc \left[\left(j-1\right)%n\right] \left(j-1\right) + t - {t}_{stop} \left(j-1\right) , n = 2 T / t ,$
dans lequel
*acc*[(*j* - 1)%*n*](*j* - 1) satisfait à la troisième formule suivante : $acc \left[\left(j-1\right)%n\right] \left(j-1\right) = t - {t}_{stop} \left(j-2\right) ,$ dans lequel
*acc*[(*j* - 1)%*n*](*j* - 1) indique le temps pendant lequel le second appareil de communication est autorisé à envoyer un paquet de données à un ((*j* - 1)%*n*)^{ème} moment d' échantillonnage dans un délai de 2*T* temps avant un (*j* - 1)^{ème} moment d'échantillonnage ; (*j* - 1)%*n* indique un reste obtenu en divisant *j -* 1 par *n* ; lorsque *j =* 1, *acc_*2*T*(1) *=* 2*T, acc*[*i*](1) *= t,* et *i* = 0,1, ... ... , *n* - 1, ou lorsque *j =* 2 *, acc_*2*T*(2) *= acc*_2*T*(1) *- acc*[1](1) *+ t*- *t*ₛₜₒₚ (1) ; *t*ₛₜₒₚ(*j* - 2) indique la première durée déterminée à un *(j* - 2)^{ème} moment d'échantillonnage ; et *T* indique le délai de transmission unidirectionnel de la transmission de données entre le premier appareil de communication et le second appareil de communication.

7. Procédé selon l'une quelconque des revendications 1 à 6, dans lequel le procédé comprend en outre : la détermination, par le premier appareil de communication, d'une première durée sur la base du cycle d'échantillonnage et de l'occupation du premier tampon au premier moment d'échantillonnage comprend :
lorsque l'occupation du premier tampon au premier moment d'échantillonnage est supérieure à *b*ₘₐₓᵢₘᵤₘ - (2*T* + *t*) ∗ *s*, la détermination, par le premier appareil de communication, de la première durée sur la base du cycle d'échantillonnage et de l'occupation du premier tampon au premier moment d'échantillonnage, dans lequel 0 ≤ *b*ₘₐₓᵢₘᵤₘ - (2*T* + *t*) ∗ *s* ≤ *t* ∗ *s* ; *b*ₘₐₓᵢₘᵤₘ indique la taille du premier tampon ; *s* indique le débit de réception de données du port du premier appareil de communication, ou *s* indique le débit auquel le premier appareil de communication reçoit le paquet de données de première priorité ; *t* indique le cycle d'échantillonnage ; et *T* indique le délai de transmission unidirectionnel de transmission de données entre le premier appareil de communication et le second appareil de communication.

8. Procédé selon l'une quelconque des revendications 1 à 7, dans lequel l'envoi, par le premier appareil de communication, de premières informations d'indication au second appareil de communication comprend :
lorsque la première durée est supérieure à 0, l'envoi, par le premier appareil de communication, des premières informations d'indication au second appareil de communication.

9. Procédé selon la revendication 8 lorsqu'elle dépend de la revendication 2, dans lequel le procédé comprend en outre :
lorsque la première durée est égale à 0, l'envoi, par le premier appareil de communication, des secondes informations d'indication au second appareil de communication, dans lequel les secondes informations d'indication indiquent au second appareil de communication d'envoyer un paquet de données.

10. Premier appareil de communication (601), comprenant une mémoire (803) et un processeur (801) couplé à la mémoire, dans lequel la mémoire est configurée pour stocker un programme ; le processeur est configuré pour exécuter le programme stocké dans la mémoire ; et lorsque l'appareil de communication s'exécute, le processeur exécute le programme, pour permettre au premier appareil de communication de réaliser le procédé selon l'une quelconque des revendications 1 à 9.

11. Support de stockage lisible par ordinateur, dans lequel le support de stockage lisible par ordinateur stocke un programme informatique ; et lorsque le programme informatique est exécuté par un ordinateur, l'ordinateur est activé pour réaliser le procédé selon l'une quelconque des revendications 1 à 9.

12. Produit de programme informatique comportant des instructions, dans lequel lorsque le produit de programme informatique est exécuté par un ordinateur, l'ordinateur est activé pour réaliser le procédé selon l'une quelconque des revendications 1 à 9.
